# EUROPEAN PATENT APPLICATION

(11) **EP 4 181 308 A1**
(43) Date of publication of application: **17.05.2023**
(21) Application number: 22850699.4
(22) Date of filing: 03.08.2022
(51) Int. Cl.: H01M 50/54

(54) **ELECTRODE ASSEMBLY INTEGRATED WITH ELECTRODE LEAD, AND MANUFACTURING METHOD THEREFOR**

(30) Priority: 03.08.2021 KR 20210101915
(71) Applicant: LG Energy Solution, Ltd., Seoul 07335 (KR)
(72) Inventor: KWON, Soon Ho, Daejeon 34122 (KR); JO, Mi Ru, Daejeon 34122 (KR); PARK, Sung Bin, Daejeon 34122 (KR); KIM, Min Gyu, Daejeon 34122 (KR); CHO, Woo Hyung, Daejeon 34122 (KR)
(74) Representative: Plasseraud IP
(86) International application number: PCT/KR2022/011451
(87) International publication number: WO 2023/014071

(57) **Abstract**

The present invention relates to an electrode assembly including a positive electrode, a negative electrode, and a separator interposed between the positive electrode and the negative electrode, wherein an electrode tab protrudes from at least an outer periphery of one side of each of a plurality of positive electrodes and a plurality of negative electrodes, the electrode tabs being coupled to each other in tight contact in a stacking direction to constitute an electrode tab bundle, at least one through-hole is formed through the electrode tab bundle, a connection member made of an electrically conductive material is inserted through the through-hole, and an electrode lead is electrically connected to the electrode tab bundle via the connection member in a melted state, and wherein electrical connection between the electrode tab bundle and the electrode lead is achieved by heating and pressing.

## Description

### [Technical Field]

The present invention relates to an electrode-lead-integrated electrode assembly. More particularly, the present invention relates to an electrode-lead-integrated electrode assembly having a structure in which an electrode lead and an electrode tab bundle are coupled to each other using an electrically conductive and thermally fusible material.

### [Background Art]

Demand for secondary batteries as energy sources for electronic devices, such as mobile phones, laptop computers, and wearable devices, or electric vehicles has increased. Based on the kind of an electrode, secondary batteries are classified into a nickel-cadmium secondary battery, a nickel-hydride secondary battery, and a lithium secondary battery, and research and development on the lithium secondary battery, which has advantages of high operating voltage and high energy density per unit weight, has been actively conducted.

Based on the shape of a battery case, the lithium secondary battery is classified as a prismatic secondary battery or a cylindrical secondary battery having an electrode assembly mounted in a metal can or a pouch-shaped secondary battery having an electrode assembly mounted in a pouch case made of an aluminum laminate sheet.

With diversification of devices to which the lithium secondary battery is applied, it is necessary to provide a battery cell having reduced weight and high energy density. Hence, attempts to apply an electrode current collector having a structure in which a metal layer is coupled to each of opposite surfaces of an insulation layer have been made.

In addition, with increase in capacity of the lithium secondary battery, the scale of ignition or explosion accidents due to overcharging, exposure to high temperature, external impact, etc. has increased. Such ignition or explosion may be mainly caused by short circuit occurring as the result of a positive electrode and a negative electrode coming into direct contact with each other in the electrode assembly. When such short circuit occurs, electrons as well as lithium ions are concentrated along a contact region between the positive electrode and the negative electrode, whereby generation of heat in the battery is accelerated.

In order to inhibit movement of electrons and lithium ions when the temperature in the battery is increased, therefore, use of an electrode current collector having a structure in which an insulation layer is interposed between metal foils has been proposed.

When the electrode current collector including the insulation layer is used, however, there is a problem in that it is difficult to form an electrode tab bundle by coupling a plurality of positive electrode tabs or a plurality of negative electrode tabs to each other using a conventional welding method, such as ultrasonic welding or laser welding.

In order to solve such a problem, a through-hole may be formed in each of the electrode tabs, the electrode tabs may be stacked to constitute an electrode tab bundle, a low-melting-point metal may be inserted through the through-holes, and heating and pressing may be performed to achieve electrical connection between the electrode tabs.

The electrode assembly is coupled to an electrode lead in the state in which electrical connection between the plurality of electrodes is achieved by the low-melting-point metal, and the electrode lead may serve as an electrode terminal.

Conventionally, a welding method, such as ultrasonic welding or laser welding, is used to couple the electrode tab bundle and the electrode lead to each other.

In connection therewith, Patent Document 1 discloses a secondary battery including an electrode, which includes a current collector having a multilayered structure in which an insulation layer is disposed between conductive layers and an active material layer formed on the current collector, and a tab electrode for wire withdrawal connected to the electrode, wherein the tab electrode is electrically connected to the electrode via a conductive material made of a metal material that is melted by heat generated in a battery.

In Patent Document 1, ultrasonic welding, laser welding, resistance welding, spot welding, etc. are used as a method of connecting the tab electrode and the electrode to each other

However, there is a danger of a coupling portion between the electrode tab bundle and the electrode lead being contaminated by impurities generated during such welding.

Therefore, there is a high necessary for an electrode assembly configured to have a structure capable of manufacturing a battery cell that is light and has high energy density and preventing welding-related problems.

### (Prior Art Document)

(Patent Document 1) Japanese Registered Patent Publication No. 5784928 (2015.07.31)

### [Disclosure]

### [Technical Problem]

The present invention has been made in view of the above problems, and it is an object of the present invention to provide an electrode-lead-integrated electrode assembly configured such that electrodes constituting an electrode tab bundle are electrically connected to each other via a connection member and such that the connection member is heated and pressed to couple the electrode tab bundle to an electrode lead and a method of manufacturing the same.

### [Technical Solution]

An electrode assembly according to the present invention to accomplish the above object includes a positive electrode, a negative electrode, and a separator interposed between the positive electrode and the negative electrode, wherein an electrode tab protrudes from at least an outer periphery of one side of each of a plurality of positive electrodes and a plurality of negative electrodes, the electrode tabs being coupled to each other in tight contact in a stacking direction to constitute an electrode tab bundle, at least one through-hole is formed through the electrode tab bundle, a connection member made of an electrically conductive material is inserted through the through-hole, and an electrode lead is electrically connected to the electrode tab bundle via the connection member which is melted.

The connection member may have a shape of a bar, and the connection member may be inserted through the through-hole so as to extend through the electrode tab bundle.

The connection member may be made of a low-melting-point metal.

The electrode lead may have a recess or an opening having a size corresponding to the size of the through-hole of the electrode tab bundle, and the electrode lead may be coupled to an upper surface or a lower surface of the electrode tab bundle.

The electrode lead may have an opening having a size corresponding to the size of the through-hole of the electrode tab bundle, the electrode lead may be disposed within the electrode tab bundle, and the connection member may be inserted through the opening of the electrode lead and the through-hole of the electrode tab bundle.

Each of the positive electrodes and the negative electrodes may include an electrode current collector having a metal layer coupled to each of opposite surfaces of an insulation layer.

The thickness of the insulation layer may be greater than the thickness of one of the metal layers.

The density of the insulation layer may be lower than the density of each of the metal layers.

The melting point of the connection member may be lower than the melting point of the insulation layer.

In addition, the present invention provides a method of manufacturing the electrode assembly. Specifically, the method includes (a) forming the through-hole in each of the electrode tabs, (b) stacking the electrode tabs to constitute the electrode tab bundle, (c) disposing the electrode lead at the electrode tab bundle, (d) inserting the connection member through the through-holes, and (e) melting the connection member.

Step (e) may include a process of heating and pressing the electrode tab bundle.

In step (e), the electrodes constituting the electrode tab bundle and the electrode lead may be simultaneously coupled to each other.

The electrode lead may have a recess or an opening having a size corresponding to the size of the through-hole formed in each of the electrode tabs.

In addition, the present invention may provide various combinations of the above solving means.

### [Advantageous Effects]

As is apparent from the above description, in an electrode assembly according to the present invention, a connection member made of an electrically conductive material is inserted through a through-hole formed in each electrode tab, and the connection member is heated and pressed, whereby it is possible to achieve electrical connection between the plurality of electrode tabs.

In addition, electrodes, each of which has a structure in which a metal layer is coupled to each of opposite surfaces of an insulation layer, are used, whereby it is possible to reduce the weight of an electrode current collector and to improve energy density.

In addition, when an electrode tab bundle is formed, a process of coupling the electrode tab bundle to an electrode lead may be simultaneously performed, whereby it is possible to simplify an electrode assembly manufacturing process and to reduce time consumed.

In addition, a connection member made of a low-melting-point alloy may be used, and therefore the connection member may be melted when the temperature of a battery cell is increased, whereby the electrode lead and the electrode tab bundle in a state of being coupled to each other may be separated from each other. Consequently, charging is interrupted, whereby it is possible to prevent spread to ignition and explosion of the battery cell.

### [Description of Drawings]

FIG. 1 is an exploded perspective view of an electrode assembly according to the present invention.
FIG. 2 is a vertical sectional view of an electrode assembly according to the present invention and an enlarged view of an electrode current collector.
FIG. 3 is a perspective view of an electrode lead according to the present invention.
FIG. 4 is a side view of a coupling portion between an electrode tab bundle and the electrode lead.
FIG. 5 is a schematic view of an electrode assembly manufacturing method according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

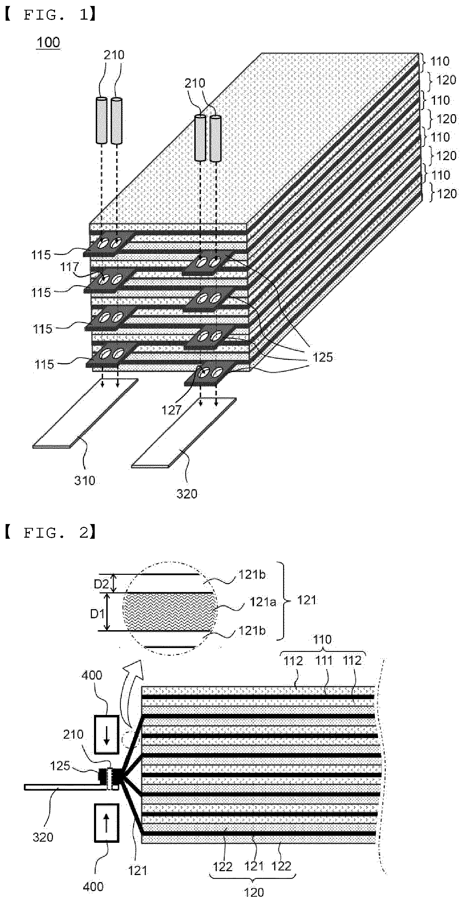

FIG. 1 is an exploded perspective view of an electrode assembly according to the present invention.

Referring to FIG. 1, the electrode assembly 100 according to the present invention is configured to have a structure in which a plurality of positive electrodes 110 and a plurality of negative electrodes 120 are stacked in the state in which separators (not shown) are interposed respectively therebetween, wherein each of the positive electrodes 110 includes a positive electrode tab 115 protruding from the outer periphery of one side thereof, and each of the negative electrodes 120 includes a negative electrode tab 125 protruding from the outer periphery of one side thereof.

Although FIG. 1 shows the structure in which the positive electrode tabs and the negative electrode tabs protrude from the same outer peripheries, the positive electrode tabs and the negative electrode tabs may protrude in different directions. In addition, the number of positive electrode tabs protruding from one positive electrode may be two or more, and the number of negative electrode tabs protruding from one negative electrode may be two or more.

Each of the positive electrode tabs 115 or each of the negative electrode tabs 125 is provided at a predetermined position thereof with one or more through-holes 117 or 127, and connection members 210 each made of an electrically conductive material are inserted through the through-holes 117 or 127.

A positive electrode lead 310 is disposed under the positive electrode tabs 115, a negative electrode lead 320 is disposed under the negative electrode tabs 125, and the connection members inserted through the through-holes are heated and pressed so as to be melted. A positive electrode tab bundle formed as the result of the positive electrode tabs 115 being coupled to each other in tight contact in a stacking direction is coupled to the positive electrode lead 310 via the melted connection members, and a negative electrode tab bundle formed as the result of the negative electrode tabs 125 being coupled to each other in tight contact in a stacking direction is coupled to the negative electrode lead 320 via the melted connection members.

Consequently, the positive electrode tabs 115 may be electrically connected to the positive electrode lead 310, and the negative electrode tabs 125 may be electrically connected to the negative electrode lead 120.

In the electrode assembly according to the present invention, as described above, coupling between the positive electrode tab bundle and the positive electrode lead and coupling between the negative electrode tab bundle and the negative electrode lead are achieved using a method of inserting the connection members through the through-holes formed in the positive electrode tabs and the negative electrode tabs and melting the connection members, not by welding, such as ultrasonic welding or laser welding.

The connection members 210 are inserted through the through-holes 117 and 127, whereby the connection members are inserted through the through-holes of the electrode tab bundle constituted by the overlapping electrode tabs. Each of the connection members may be formed in the shape of a bar, such as a cylinder or a polygonal column.

FIG. 2 is a vertical sectional view of an electrode assembly according to the present invention and an enlarged view of an electrode current collector.

Referring to FIG. 2, the electrode assembly of FIG. 2 may have the same stacking structure as the electrode assembly shown in FIG. 1.

FIG. 2 shows the structure in which negative electrode tabs are coupled to a negative electrode lead. Hereinafter, a coupling portion between a negative electrode tab bundle and the negative electrode lead will be described, and this description may be equally applied to a coupling portion between a positive electrode tab and a positive electrode lead.

In the electrode assembly shown in FIG. 2, a positive electrode 110 is a double-sided positive electrode having a positive electrode mixture layer 112 applied to opposite surfaces of a positive electrode current collector 111, and a negative electrode 120 is a double-sided negative electrode having a negative electrode mixture layer 122 applied to opposite surfaces of a negative electrode current collector 121.

A negative electrode lead 320 is disposed under the negative electrode tabs 125, and an opening having a size corresponding to the size of a through-hole formed in each of the negative electrode tabs 125 is formed in the negative electrode lead 320.

A connection member 210 inserted through the through-holes formed in the negative electrode tabs 125 extends to the opening of the negative electrode lead 320 and is then inserted into the opening.

Consequently, the negative electrode tabs 125 may be brought into contact with the negative electrode lead 320 via the connection member 210.

The connection member 210 may be made of a low-melting-point metal. The low-melting-point metal may be an alloy of two or more selected from the group consisting of bismuth, tin, lead, cadmium, zinc, and indium.

When the coupling portion between the negative electrode tab bundle and the negative electrode lead are pressed using heating members 400 from above and below in the state in which the connection member 210 made of the low-melting-point metal is inserted through the through-holes and into the opening, as described above, the connection member may be melted, whereby it is possible to hermetically seal the through-holes and the opening and to secure the force of coupling between the negative electrode tab bundle and the negative electrode lead.

In the present invention, as described above, the low-melting-point metal is used to perform coupling between the negative electrode tab bundle and the negative electrode lead, and therefore it is possible to prevent a conventional problem in that the electrode assembly is contaminated or short circuit occurs due to impurities generated during welding when welding is performed.

Meanwhile, when a low-melting-point polymer is used as the connection member, a mixture of the low-melting-point polymer and metal powder may be used in order to secure electrical conductivity.

The length of the structure in which the connection member 210 is inserted through the through-holes of the negative electrode tab bundle in the state in which the negative electrode tab bundle and the negative electrode lead 320 are stacked may be equal to or greater than at least the height of the electrode tab bundle.

The negative electrode current collector 121 is configured to have a structure in which a metal layer 121b is coupled to each of opposite surfaces of an insulation layer 121a. The thickness D1 of the insulation layer 121a may be greater than the thickness D2 of the metal layer 121b. For example, the thickness of the insulation layer may be 4 µm to 15 um, and the thickness of one of the metal layers may be 0.1 µm to 3 µm.

In addition, the density of the insulation layer may be lower than the density of the metal layer. As described above, the negative electrode current collector according to the present invention includes an insulation layer having relatively low density, and therefore it is possible to provide a lighter negative electrode current collector than when the entirety of the negative electrode current collector is made of only a metal layer. Consequently, it is possible to reduce the overall weight of a battery cell and to manufacture a battery cell having improved energy density.

A polymer film may be used as the insulation layer. However, the positive electrode and the negative electrode undergo a drying step to dry a solvent after coating of the positive electrode mixture layer and the negative electrode mixture layer, and the temperature in the drying step is about 100°C to 130°C.

In order to prevent the insulation layer from being melted in the drying step, therefore, a polymer film having a melting point higher than 150°C may be used.

For example, the polymer film may be made of at least one selected from the group consisting of polyethylene terephthalate (PET), polystyrene (PS), polypropylene (PP), polyamide (PA), polyimide (PI), triacetyl cellulose (TAC), and cyclo olefin polymer (COP).

In the present invention, as described above, an electrode current collector having a metal layer coupled to each of opposite surfaces of an insulation layer may be used, wherein electrical connection between the metal layers on the opposite surfaces of the insulation layer is prevented by the insulation layer.

Also, in the electrode current collector having the above structure, electrical connection between the electrode tabs constituting the electrode tab bundle is not achieved only by tight contact between the electrode tabs.

Hence, when a through-hole is formed in each electrode tab, a low-melting-point metal that is melted at a low temperature and is electrically conductive is inserted through the through-holes, and the low-melting-point metal is melted, the metal layers may be electrically connected to each other in each electrode tab, and electrical connection may also be achieved between the plurality of electrodes constituting the electrode tab bundle. In addition, when the low-melting-point metal is melted in the state in which the electrode lead is in contact with the electrode tab bundle, electrical connection through the low-melting-point metal may be achieved at the contact interface between the electrode tab bundle and the electrode lead.

Meanwhile, it is necessary to prevent the insulation layer in the electrode current collector from being melted during melting of the connection member, and therefore the connection member may be made of a material that has a melting point lower than the melting point of the insulation layer. However, a low-melting-point metal having a melting point of 60°C to 250°C may be used in consideration of the fact that the low-melting-point metal is inserted through only the through-hole of each electrode tab.

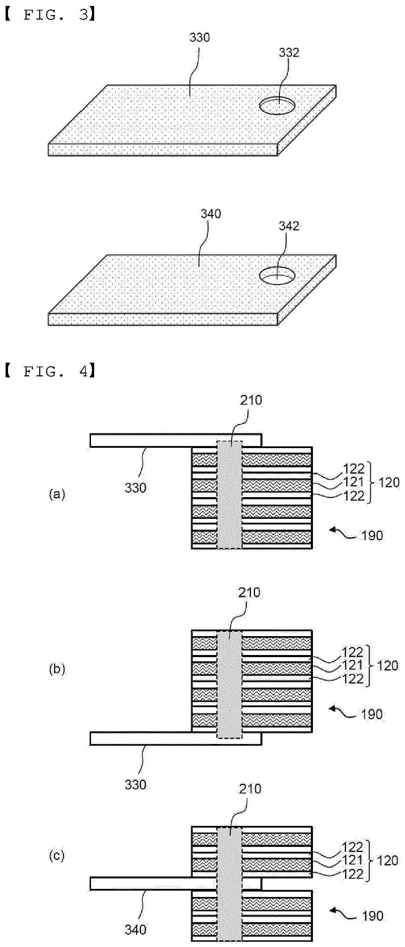

FIG. 3 is a perspective view of an electrode lead according to the present invention, and FIG. 4 is a side view of a coupling portion between an electrode tab bundle and the electrode lead.

Referring to FIGs. 3 and 4, a recess 332 having a size corresponding to the size of a through-hole of a negative electrode tab bundle 190 is formed in the part of a negative electrode lead 330 of FIG. 3 with which a connection member is brought into contact. When the connection member 210 is melted in a state of being inserted into the recess 332, therefore, electrical connection between the negative electrode lead 330 and the negative electrode tab bundle 190 may be achieved.

When a negative electrode lead 330 having a recess 332 formed therein, as in the negative electrode lead 330, is used, neat appearance may be provided, since the melted connection member does not flow through the negative electrode lead.
(a) and (b) of FIG. 4 show the states in which the negative electrode lead 330 is coupled to the electrode tab bundle. In (a), coupling between the negative electrode lead 330 and the negative electrode tab bundle 190 is achieved by melting of the connection member 210 in the state in which the negative electrode lead is located at an upper surface of the negative electrode tab bundle. In (b), coupling between the negative electrode lead 330 and the negative electrode tab bundle 190 is achieved by melting of the connection member 210 in the state in which the negative electrode lead is located at a lower surface of the negative electrode tab bundle.

A negative electrode lead 340 of FIG. 3 is provided therein with an opening 342 having a size corresponding to the size of the through-hole of the negative electrode tab bundle 190.
(c) of FIG. 4 shows the state in which the negative electrode lead 340 having the opening 342 formed therein is located in the negative electrode tab bundle 190 and the connection member 210 is inserted through the through-hole of the negative electrode tab bundle 190 and the opening 342 of the negative electrode lead 340.

When the negative electrode lead is located at the upper surface or the lower surface of the negative electrode tab bundle, as shown in (a) and (b) of FIG. 4, a negative electrode lead 340 having an opening formed therein may also be used.

When the low-melting-point metal is used as the connection member, as described above, if the temperature of a battery is increased to the melting point of the low-melting-point metal or more due to abnormal operation of the battery, the electrode lead and the electrode tab bundle may be separated from each other at the coupling portion therebetween, whereby the flow of current may be interrupted. Consequently, it is possible to interrupt the flow of current before ignition and explosion of a battery cell due to a thermal runaway phenomenon, whereby it is possible to prevent ignition and explosion of the battery cell.

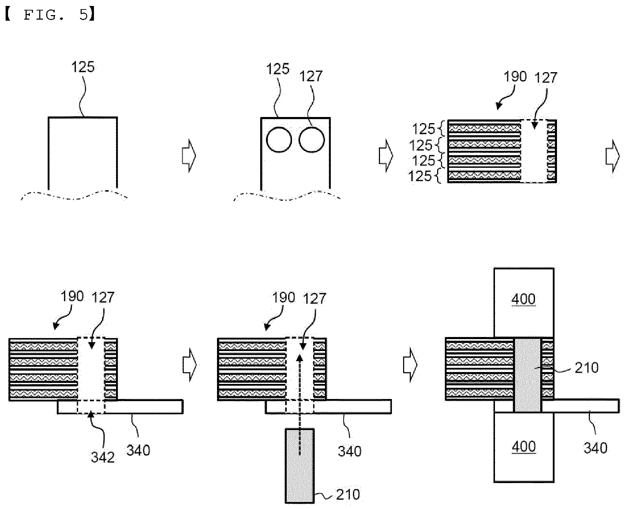

FIG. 5 is a schematic view of an electrode assembly manufacturing method according to the present invention.

Although FIG. 5 shows a method of coupling a negative electrode lead to a negative electrode tab bundle, the description thereof may also be equally applied to the case in which a positive electrode lead is coupled to a positive electrode tab bundle.

Referring to FIG. 5, in order to manufacture an electrode assembly according to the present invention, negative electrode current collectors are prepared, a through-hole 127 is formed in each negative electrode tab 125, and the negative electrode tabs 125 are stacked so as to be aligned with each other to constitute a negative electrode tab bundle 190.

Consequently, the through-holes 127 may overlap each other in a stacking direction, and the through-holes may communicate with each other in the negative electrode tab bundle in which the negative electrode tabs are in tight contact with each other.

A negative electrode lead 340 having an opening 342 formed therein is disposed at a lower surface of the negative electrode tab bundle 190, and a connection member 210 is inserted through the through-holes 127 and the opening 342.

In the state in which the connection member is inserted through the through-holes and the opening, as described above, a heating member 400 is disposed at each of an upper surface of the negative electrode tab bundle and a lower surface of the negative electrode lead, and the heating members 400 are moved toward the negative electrode tab bundle 190 and the negative electrode lead 340 to press the negative electrode tab bundle and the negative electrode lead. The connection member 210, the temperature of which has been increased through the pressing process using the heating members 400, is melted.

The through-holes 127 and the opening 342 are completely filled with the melted connection member 210. Even though each of the negative electrode tabs is configured to have a structure in which an insulation layer is included therein and metal layers are coupled to the insulation layer, therefore, electrical connection between the metal layers in each negative electrode tab is achieved, electrical connection between the negative electrode tabs 125 constituting the negative electrode tab bundle 190 is achieved, and electrical connection between the negative electrode tab bundle 190 and the negative electrode lead 340 is achieved.

In the present invention, as described above, coupling between the electrodes constituting the negative electrode tab bundle and coupling between the negative electrode tab bundle and the negative electrode lead may be simultaneously performed, whereby it is possible to simplify the electrode assembly manufacturing process.

Meanwhile, when a negative electrode lead having a recess 332 formed therein is used as the negative electrode lead, as in the negative electrode lead 330 of FIG. 3, the connection member may be inserted through the through-holes of the negative electrode tab bundle and into the recess 332 of the negative electrode lead and may then be melted, whereby the negative electrode tab bundle and the negative electrode lead may be electrically connected to each other.

In addition, a negative electrode lead having neither a recess nor an opening formed therein may be used as the electrode lead according to the present invention. When the connection member is inserted through the through-holes of the negative electrode tab bundle, the connection member is brought into contact with a surface of the negative electrode lead. When the connection member is melted, therefore, coupling through the connection member may be achieved at the contact interface between the negative electrode lead and the connection member.

Those skilled in the art to which the present invention pertains will appreciate that various applications and modifications are possible within the category of the present invention based on the above description.

### (Description of Reference Symbols)

100: Electrode assembly
110: Positive electrode
111: Positive electrode current collector
112: Positive electrode mixture layer
115: Positive electrode tab
117, 127: Through-holes
120: Negative electrode
121: Negative electrode current collector
122: Negative electrode mixture layer
121a: Insulation layer
121b: Metal layer
125: Negative electrode tab
190: Negative electrode tab bundle
210: Connection member
310: Positive electrode lead
320,330, 340: Negative electrode leads
332: Recess
342: Opening
400: Heating member
D1: Thickness of insulation layer
D2: Thickness of metal layer

## Claims

1. An electrode assembly comprising a positive electrode, a negative electrode, and a separator interposed between the positive electrode and the negative electrode, wherein
an electrode tab protrudes from at least an outer periphery of one side of each of a plurality of positive electrodes and a plurality of negative electrodes, the electrode tabs being coupled to each other in tight contact in a stacking direction to constitute an electrode tab bundle,
at least one through-hole is formed through the electrode tab bundle,
a connection member made of an electrically conductive material is inserted through the through-hole, and
an electrode lead is electrically connected to the electrode tab bundle via the connection member which is melted.

2. The electrode assembly according to claim 1, wherein the connection member has a shape of a bar, and the connection member is inserted through the through-hole so as to extend through the electrode tab bundle.

3. The electrode assembly according to claim 1, wherein the connection member is made of a low-melting-point metal.

4. The electrode assembly according to claim 1, wherein the electrode lead has a recess or an opening having a size corresponding to a size of the through-hole of the electrode tab bundle, and the electrode lead is coupled to an upper surface or a lower surface of the electrode tab bundle.

5. The electrode assembly according to claim 1, wherein
the electrode lead has an opening having a size corresponding to a size of the through-hole of the electrode tab bundle,
the electrode lead is disposed within the electrode tab bundle, and
the connection member is inserted through the opening of the electrode lead and the through-hole of the electrode tab bundle.

6. The electrode assembly according to claim 1, wherein each of the positive electrodes and the negative electrodes comprises an electrode current collector having a metal layer coupled to each of opposite surfaces of an insulation layer.

7. The electrode assembly according to claim 6, wherein a thickness of the insulation layer is greater than a thickness of one of the metal layers.

8. The electrode assembly according to claim 6, wherein a density of the insulation layer is lower than a density of each of the metal layers.

9. The electrode assembly according to claim 6, wherein a melting point of the connection member is lower than a melting point of the insulation layer.

10. A method of manufacturing the electrode assembly according to any one of claims 1 to 9, the method comprising:
(a) forming the through-hole in each of the electrode tabs;
(b) stacking the electrode tabs to constitute the electrode tab bundle;
(c) disposing the electrode lead at the electrode tab bundle;
(d) inserting the connection member through the through-holes; and
(e) melting the connection member.

11. The method according to claim 10, wherein step (e) comprises a process of heating and pressing the electrode tab bundle.

12. The method according to claim 10, wherein, in step (e), the electrodes constituting the electrode tab bundle and the electrode lead are simultaneously coupled to each other.

13. The method according to claim 10, wherein the electrode lead has a recess or an opening having a size corresponding to a size of the through-hole formed in each of the electrode tabs.
